# EUROPÄISCHE PATENTANMELDUNG

(11) **EP 3 187 442 A1**
(43) Veröffentlichungstag der Anmeldung: **05.07.2017**
(21) Anmeldenummer: 15203075.5
(22) Anmeldetag: 30.12.2015
(51) Int. Cl.: B65G 59/10, B65B 43/44, B65G 59/06

(54) **DENESTER**

(71) Anmelder: MULTIVAC Sepp Haggenmüller SE & Co. KG, 87787 Wolfertschwenden (DE)
(72) Erfinder: HÖPNER, Bernd, 87437 Kempten (DE); REUBER, Daniel, 87437 Kempten (DE)
(74) Vertreter: Grünecker Patent- und Rechtsanwälte PartG mbB

(57) **Zusammenfassung**

Die Erfindung bezieht sich auf einen Denester, umfassend Vertikalführungen zum Aufnehmen eines Traystapels (11), eine Trennvorrichtung (9) mit Entstaplerschrauben (5) zum Abstapeln von einzelnen Trays (2) nach unten und eine Trayentlastungsvorrichtung (10), wobei die Trayentlastungsvorrichtung (10) gegenüberliegend angeordnete obere Rückhalteelemente (13) und untere Rückhalteelemente (12) umfasst, sowie auf ein Verfahren zum Betrieb eines solchen Denesters.

## Beschreibung

Die Erfindung bezieht sich auf einen Denester (Entstapler) gemäß dem Anspruch 1, sowie auf ein Verfahren mit den Merkmalen des Anspruchs 8, insbesondere zum Entstapeln von Schalen an oder in Schalenverschließmaschinen (Traysealer).

Aus der EP 1 275 604 A2 ist eine Vorrichtung zum Abstapeln von Blisterverpackungen bekannt, bei der Rückhaltemittel in Form von hin- und herbeweglichen Messern vorzugsweise mittels Schubzylindern zwischen einer Rückhalteposition und einer Freigabeposition bewegt werden können. In der Rückhalteposition ragen die Messer in den Spalt zwischen zwei übereinanderliegenden Blisterverpackungen, um das Gewicht des Blisterstapels von Verpackungen, die sich oberhalb des Messers befinden, aufzunehmen, um das Gewicht des Blisterstapels, das auf die Separiermittel drückt, zu verringern. Somit soll ein Verklemmen von Blistern und in Folge eine Unterbrechung der Abstapelvorrichtung verhindert werden. Um weitere Blisterverpackungen vom zurückgehalten Blisterstapel nach unten zum Separieren freizugeben, sind unterhalb der oberen Rückhaltemittel und etwas oberhalb der Separiermittel untere Rückhaltemittel vorgesehen, die in eine Rückhalteposition gebracht werden, bevor die oberen Rückhaltemittel in die Freigabeposition gebracht werden, damit der Blisterstapel bis zu den unteren Rückhaltemitteln nachrutschen oder fallen kann. Anschließend werden die oberen Rückhaltemittel wieder zurück in die Rückhalteposition gebracht und die unteren Rückhaltemittel in die Freigabeposition, damit weitere Blister abgestapelt werden können, ohne dass dabei das Gewicht des gesamten Blisterstapels auf den Separiermitteln lastet. Für die oberen und unteren Rückhaltemittel sind eine Vielzahl von beispielsweise pneumatischen Hubzylindern vorgesehen.

Weitere Traystapelentlastungsvorrichtungen sind aus der EP 2 799 350 A1, EP 2 397 413 A1 und WO 2015/028022 A1 bekannt.

Aufgabe der Erfindung ist es, eine konstruktiv einfache Ausführung einer Traystapelentlastung für einen Denester zur Verfügung zu stellen.

Diese Aufgabe wird gelöst durch einen Denster gemäß dem Oberbegriff das Anspruchs 1 bzw. durch ein Verfahren mit den Merkmalen des Anspruchs 8. Vorteilhafte Weiterbildungen der Erfindung sind in den Unteransprüchen angegeben.

Der erfindungsgemäße Denester umfasst Vertikalführungen zum Aufnehmen eines Traystapels, eine Trennvorrichtung, beispielsweise mit Entstaplerschrauben, zum Abstapeln von einzelnen Trays nach unten und eine Trayentlastungsvorrichtung, wobei die Trayentlastungsvorrichtung bezüglich des Traystapels mindestens ein oberes Rückhalteelement und mindestens ein unteres Rückhalteelement umfasst, die auf einer gemeinsamen Seite des Traystapels angeordnet und dazu konfiguriert sind, an zwei vertikal unterschiedlichen Positionen je einen Teil des Traystapels zu halten. Es können auch an zwei, drei oder mehr Seiten des Traystapels solche oberen und unteren Rückhalteelemente vorgesehen sein, so dass Paare von zumindest im Wesentlichen einander gegenüberliegend angeordneten Rückhalteelementen gebildet werden. Die Erfindung zeichnet sich dadurch aus, dass das obere und das untere Rückhalteelement jeweils einer Seite mittels eines gemeinsamen Antriebs oder einer gemeinsamen Getriebewelle bewegbar sind. Die Formulierung "gegenüberliegend angeordnete" Rückhalteelemente bedeutet im Falle von weitestgehend rechteckigen Trays, dass eine Trayentlastungsvorrichtung sich an einer ersten Seite des Traystapels befindet und sich eine weitere Trayentlastungsvorrichtung an der bezogen auf die Trayseiten gegenüberliegenden Seite des Trays befindet. Es ist nicht erforderlich, dass die Trayentlastungsvorrichtungen einander direkt gegenüber liegen, beispielsweise gespiegelt an einer Symmetrieachse des Trays. Denkbar ist auch eine Anordnung der Trayentlastungsvorrichtungen im Falle von runden oder ovalen Trays, bei denen die Trayentlastungsvorrichtungen nicht direkt symmetrisch gegenüber einer Symmetrieachse oder eines Mittelpunktes der Trays angeordnet sein müssen.

Vorzugsweise sind das obere und das untere Rückhalteelement einer Seite an einer Wippe angebracht, wodurch mit einer einfachen Konstruktion eine Trayentlastungsvorrichtung mit zwei vertikal unterschiedlichen Entlastungspunkten ermöglicht wird, bei der das untere und das obere Rückhalteelement separat und gemeinsam wirken können. So kann gezielt eine vorbestimmte Gruppe von Trays an die Trennvorrichtung übergeben werden, die lediglich eine geringe Belastung auf den untersten Tray ausübt und somit ungewollte Verformungen dieses Trays verhindert.

Die Rückhalteelemente sind bevorzugt jeweils zueinander verstellbar an der Wippe angebracht, um an unterschiedliche Trayabstände und vertikalen Lücken zwischen den Rändern der Trays anpassbar zu sein. So ist der Denester universell einsetzbar für verschiedene Ausführungen von Trays.

Dabei sind vorzugsweise das obere Rückhalteelement oberhalb und das untere Rückhalteelement unterhalb einer Drehachse der Wippe angeordnet.

Der Antrieb der Wippe weist in einer vorteilhaften Ausführung einen pneumatischen Zylinder oder einen elektromotorischen Antrieb auf, um die Rückhalteelemente zwischen verschiedenen Stellungen zu positionieren.

In einer alternativen und besonders vorteilhaften Ausführungsform sind das obere und das untere Rückhalteelement mittels Nocken, die auf einer gemeinsamen Getriebewelle, vorzugsweise der Trennvorrichtung, angebracht sind, bewegbar. Somit ist zusätzlich zur Trennvorrichtung kein weiterer Aktor für die Entlastungsvorrichtung notwendig und es müssen nicht mehrere Aktoren bzw. Antriebe zueinander synchronisiert werden.

Dabei ist vorzugsweise die Getriebewelle ein Teil des Antriebs für die Entstaplerschrauben, um eine einfache Konstruktion zu ermöglichen.

Ein erfindungsgemäßes Verfahren zum Betrieb eines Denesters der ersten oder zweiten Ausführungsvariante zeichnet sich dadurch aus, dass die gemeinsame Bewegung der oberen und der unteren Rückhalteelemente derart erfolgt, dass nicht nur die oberen oder die unteren Rückhalteelemente abwechselnd den Traystapel entlasten und dabei in den Stapel eingreifen, sondern während der Bewegung der Rückhalteelemente auch beide Rückhalteelemente zeitgleich den Traystapel entlasten bzw. in den Stapel eingreifen.

In einer ersten Variante des erfindungsgemäßen Verfahrens erfolgt bevorzugt ein wechselnder Eingriff der oberen bzw. der unteren Rückhalteelemente zyklisch mit jedem abgestapelten Tray.

In einer zweiten Variante erfolgt die Entlastung des Traystapels vorzugsweise über eine Zeit, die einer Entstapelzeit von mehreren Trays entspricht. Dabei wird bevorzugt die Anzahl von Trays freigegeben, die der Anzahl von Trays entspricht, die zwischen den unteren und den oberen Rückhaltelementen vorgesehen sind. So wird der Traystapel nur in zeitlichen Abständen bearbeitet und dies führt zu einem prozesssicheren und ruhigen Betrieb des Denesters.

Im Folgenden wird ein vorteilhaftes Ausführungsbeispiel der Erfindung anhand einer Zeichnung näher dargestellt. Im Einzelnen zeigen:
Fig. 1: einen erfindungsgemäßen Denester,
Fig. 2: eine Trenneinrichtung und eine erste Ausführung der Entlastungseinrichtung,
Fig. 3: eine Seitenansicht der Trenn- und der Entlastungseinrichtung,
Fig. 4: eine Detailansicht der Entlastungseinrichtung,
Fig. 5: eine zweite Ausführung der Entlastungseinrichtung,
Fig. 6: eine Seitenansicht der Entlastungseinrichtung aus Fig. 5 in einer ersten Stellung,
Fig. 7: eine Seitenansicht der Entlastungseinrichtung in einer Zwischenstellung und
Fig. 8: eine Seitenansicht der Entlastungseinrichtung in einer zweiten Stellung.

Gleiche Komponenten sind in den Figuren durchgängig mit gleichen Bezugszeichen versehen worden.

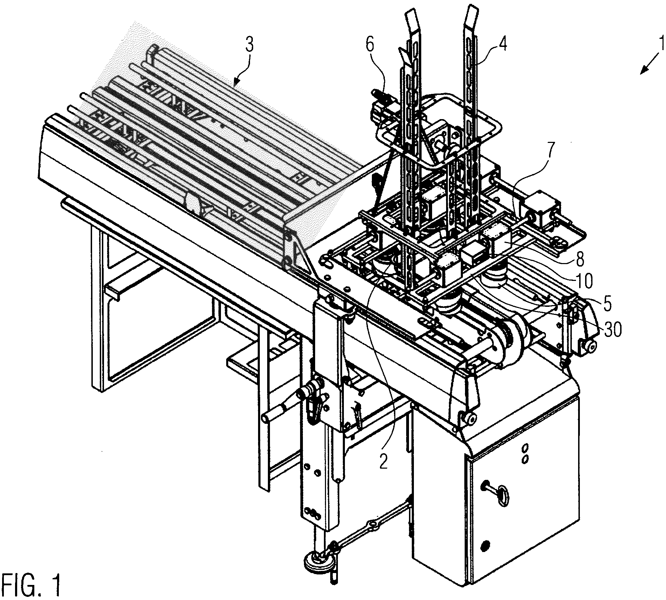

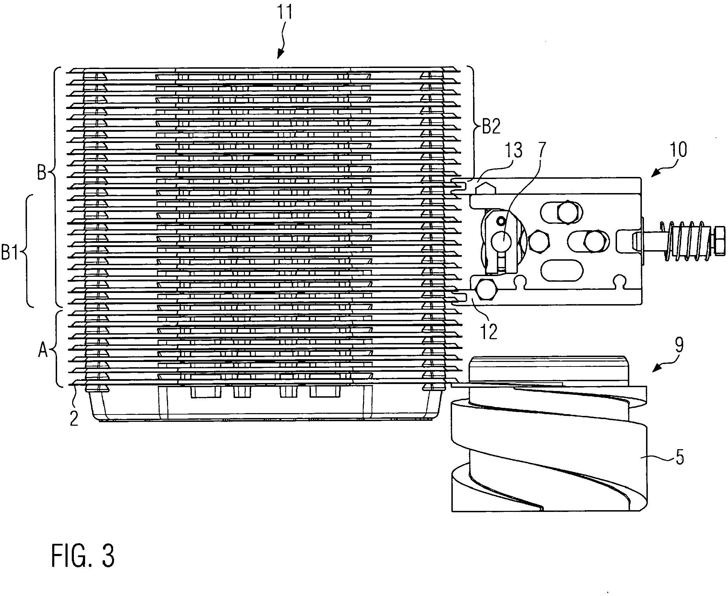

Figur 1 zeigt einen erfindungsgemäßen Denester 1, der konfiguriert ist, um Schalen 2 einzeln auf eine Transporteinheit 3 fallen zu lassen, um die Schale 2, auch als Tray bezeichnet, anschließend einer Füllstation oder Einlegestation einer Verpackungsmaschine zuzuführen. Der Denester 1 weist Vertikalführungen 4 auf, um einen Stapel von Trays 2 aufzunehmen. Vier Entstaplerschrauben 5 werden von einem gemeinsamen Motor 6, vorzugsweise von einem Servomotor, angetrieben. Jeweils zwei Entstaplerschrauben 5 sind mittels jeweils eines Getriebes 8 für jede Entstaplerschraube 5 auf einer gemeinsamen Getriebewelle 7 angebracht und entlang dieser Getriebewelle 7 verschiebbar, um an unterschiedliche Traygrößen anpassbar zu sein. Über zwei Getriebe 8 wird die Motorbewegung auf die beiden Getriebewellen 7 synchronisiert übertragen. Auf zwei bezüglich des Traystapels 11 (s. Figur 3) gegenüberliegenden Seiten ist jeweils eine Trayentlastungsvorrichtung 10 vorgesehen, um einen Traystapel 11 zu halten und somit die Kraft des Traystapels 11 auf die Entstaplerschrauben 5 bzw. die unterste Schale 2 zu reduzieren.

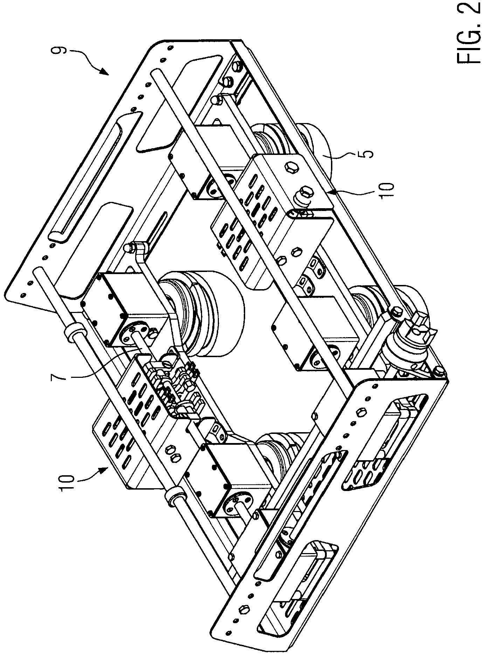

Figur 2 zeigt einen Ausschnitt des Denesters 1 im Bereich einer Trennvorrichtung 9 mit den vier Entstaplerschrauben 5 sowie zwei einander gegenüberliegenden Trayentlastungsvorrichtungen 10, die über die Getriebewellen 7 gemeinsam mit den Entstaplerschrauben 5 angetrieben werden.

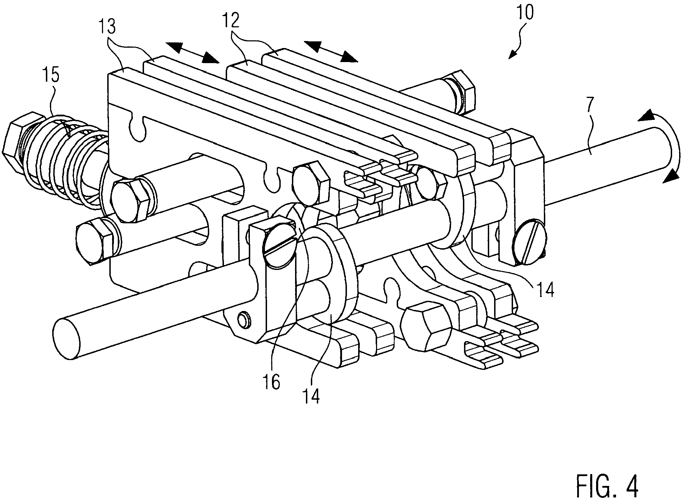

In Figur 3 ist eine Seitenansicht der Trennvorrichtung 9 mit einer Entstaplerschraube 5 und der Trayentlastungsvorrichtung 10 dargestellt. Dabei liegt der unterste Tray 2 eines unteren Teils A des Traystapels 11 auf der bzw. allen vier Entstaplerschrauben 5 auf. Die Trayentlastungsvorrichtung 10, die über die Getriebewelle 7 angetrieben ist, umfasst ein unteres Rückhalteelement 12 und ein oberes Rückhalteelement 13. Das untere Rückhalteelement 12 nimmt die Last eines oberen Teils B des Traystapels 11 auf, wobei das obere Rückhalteelement ebenso in den Traystapel 11 hineinragt. Dabei ist es auch möglich, dass das untere Rückhalteelement 12 lediglich einen Teil B1 des Traystapels 11 aufnimmt, da das obere Rückhalteelement 13 bereits einen oberen Teil B2 des Traystapels 11 aufnimmt. Die detaillierte Ausführung und Funktionsweise dieser Trayentlastungsvorrichtung 10 wird anhand der Fig. 4 näher erläutert.

Figur 4 zeigt eine Detailansicht der Trayentlastungsvorrichtung 10, die an der Getriebewelle 7 angeordnet ist. Eine Rotation der Getriebewelle 7 bewirkt mittels jeweils eines Nockens 14, der mit der Getriebewelle 7 drehfest verbunden ist, eine horizontale Bewegung des unteren Rückhalteelements 12 und des oberen Rückhalteelements 13. In der dargestellten Ausführung sind das untere und obere Rückhalteelement 12, 13 jeweils zweiteilig (d.h. mit zwei Vorsprüngen) ausgeführt, um ein Verkippen des rückgehaltenen Trays 2 zu verhindern, da der Tray 2 einer nur an zwei und nicht an allen vier Seiten des Trays 2 gehalten wird. Über die Stellung der Nocken 14 erfolgt die Zuordnung der Bewegung der beiden Rückhalteelemente 12, 13. Die jeweils parallel zueinander angeordneten oberen Rückhalteelemente 13 werden mittels einer Feder 15, vorzugsweise einer Druckfeder 15, mittels eines zwischen den Rückhalteelementen 13 angeordneten Kugellagers 16, dessen Innenring mit den Rückhalteelementen 13 verbunden ist, immer an der Außenfläche des Nockens 14 gehalten. Eine seitliche Führung der Rückhalteelemente 12, 13 kann über die Nocken 14 selbst oder weitere nicht näher dargestellte, aber dem Fachmann bekannte Führungstechniken ausgeführt sein.

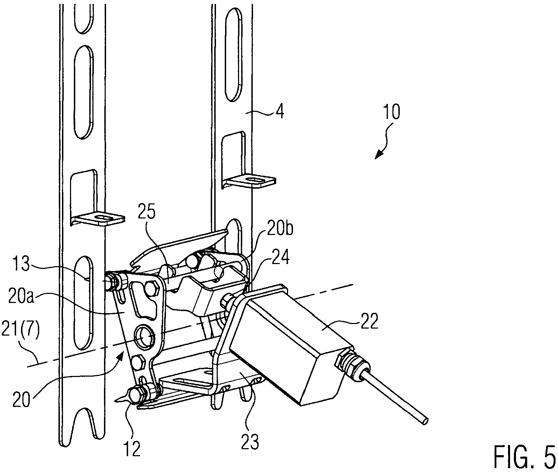

Figur 5 zeigt eine zweite Ausführung der Trayentlastungsvorrichtung 10, von denen wiederrum zwei einander gegenüberliegend an den Vertikalführungen 4 angebracht sind. Diese Trayentlastungsvorrichtung 10 umfasst eine Wippe 20 mit einer Drehachse 21, um die die Wippe 20 schwenkbar ist. Die Wippe 20 ist auf der Getriebewelle 7, siehe Figur 1, gelagert. Oberhalb der Drehachse 21 sind zwei obere Rückhalteelemente 13 und unterhalb der Drehachse 21 sind zwei untere Rückhalteelemente 12 jeweils an den seitlichen Außenseiten 20a und 20b der Wippe 20 dreh- und höhenverstellbar angebracht. Ein pneumatischer Zylinder 22 oder elektromotorischer Antrieb, der an einem Halter 23 befestigt ist, sorgt für eine reversierende Schwenkbewegung der Wippe 20, indem ein Kolben 24 an seinem Ende mit einer Schwenkwelle 25 der Wippe 20 verbunden ist. Der Halter 23 selbst ist an einem Rahmenteil 30 des Denesters 1 angebracht, siehe Figur 1.

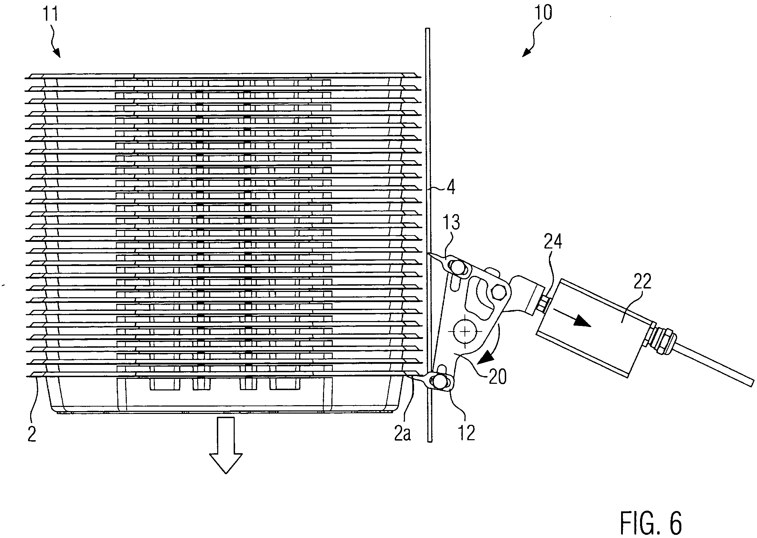

Die Funktionsweise der Trayentlastungsvorrichtung 10 mittels der Wippe 20 wird anhand der folgenden Figuren 6 bis 8 näher erläutert.

Beispielsweise zu Beginn der Produktion wird, wie in Figur 6 gezeigt, ein Traystapel 11 in den Denester 1 innerhalb der Vertikalführungen 4 eingeführt. Die Wippe 20 befindet sich in einer Stellung, bei der die Kolbenstange 24 des Antriebs 22 in einer zurückgezogenen Stellung ist und somit nur die unteren Rückhalteelemente 12 den untersten Tray 2 des Traystapels 11 am Trayrand 2a aufnehmen. Die oberen Rückhalteelemente 13 sind nicht im Eingriff mit dem Traystapel 11.

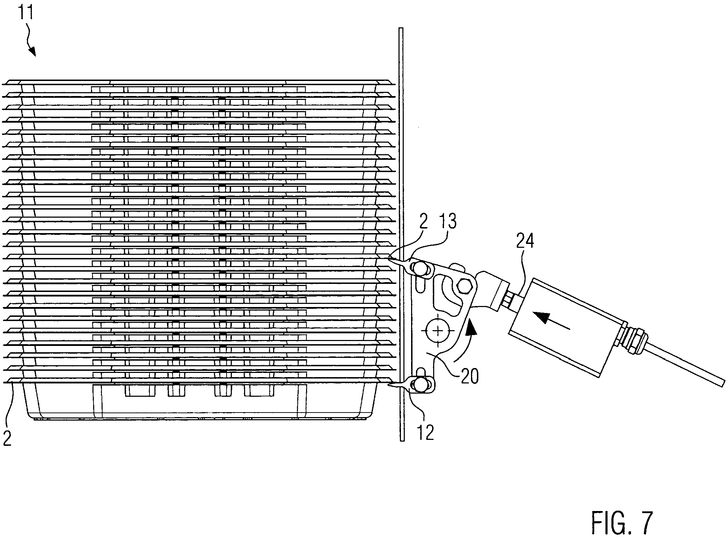

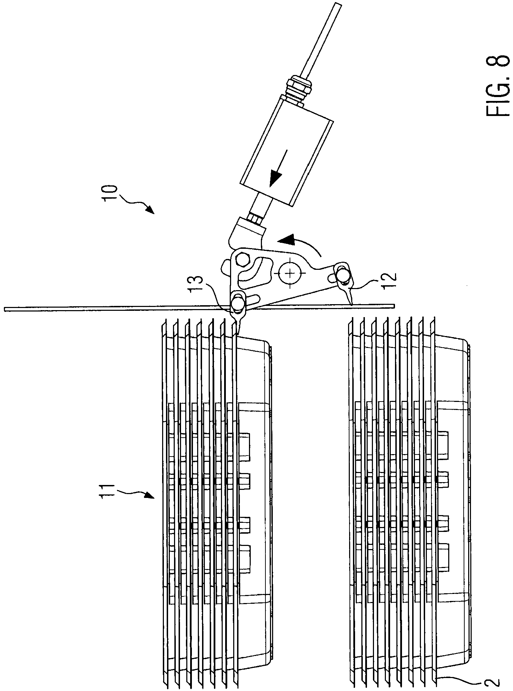

Figur 7 zeigt eine Mittelstellung der Wippe 20, bei der die Kolbenstange 24 soweit herausbewegt wurde, dass auch die oberen Rückhalteelemente 13 in den Traystapel 11, bzw. zwischen zwei Trays 2 eintauchen, um einen weiter oben befindlichen Tray 2 zu halten, bevor die oberen Rückhalteelemente 13 noch weiter in den Traystapel 11 eintauchen und sich die unteren Rückhalteelemente 12 aus dem Traystapel 11 herausbewegen, um den unteren Tray 2, die sich zwischen den unteren 12 und oberen Rückhalteelementen 13, befinden, freizugeben, wie dies in Figur 8 dargestellt ist. Diese unteren Trays 2 fallen nach unten zu den Entstaplerschrauben 5, analog zu Figur 3.

## Patentansprüche

1. Denester (1), umfassend Vertikalführungen (4) zum Aufnehmen eines Traystapels (11), eine Trennvorrichtung (9) zum Abstapeln von einzelnen Trays (2) nach unten und eine Trayentlastungsvorrichtung (10), wobei die Trayentlastungsvorrichtung (10) wenigstens auf einer Seite des aufzunehmenden Traystapels (11) mindestens ein oberes Rückhalteelement (13) und mindestens ein unteres Rückhalteelement (12) umfasst, die dazu konfiguriert sind, an zwei vertikal unterschiedlichen Positionen je einen Teil des Traystapels (11) zu halten, **dadurch gekennzeichnet, dass** ein oberes (13) und ein unteres Rückhalteelement (13), die an einer gemeinsamen Seite des aufzunehmenden Traystapels (11) angeordnet sind, mittels eines gemeinsamen Antriebs (22) oder einer gemeinsamen Getriebewelle (7) bewegbar sind.

2. Denester nach Anspruch 1, **dadurch gekennzeichnet, dass** das obere (13) und das untere Rückhalteelement (12) an einer Wippe (20) angebracht sind.

3. Denester nach Anspruch 2, **dadurch gekennzeichnet, dass** die Rückhalteelemente (12, 13) jeweils zueinander verstellbar an der Wippe (20) angebracht sind.

4. Denester nach einem der Ansprüche 2 oder 3, **dadurch gekennzeichnet, dass** das obere Rückhalteelement (13) oberhalb und das untere Rückhalteelement (12) unterhalb einer Drehachse (21) der Wippe (20) angeordnet sind.

5. Denester nach einem der Ansprüche 2 bis 4, **dadurch gekennzeichnet, dass** der Antrieb (22) der Wippe (20) einen pneumatischen Zylinder oder einen elektromotorischen Antrieb aufweist.

6. Denester nach Anspruch 1, **dadurch gekennzeichnet, dass** das obere (13) und das untere Rückhalteelement (12) mittels Nocken (14), die auf einer gemeinsamen Getriebewelle (7) angebracht sind, bewegbar sind.

7. Denester nach Anspruch 6, **dadurch gekennzeichnet, dass** die Getriebewelle (7) ein Teil des Antriebs für Entstaplerschrauben (5) der Trennvorrichtung (9) ist.

8. Verfahren zum Betrieb eines Denesters (1) gemäß einem der vorangehenden Ansprüche, **dadurch gekennzeichnet, dass** die gemeinsame Bewegung der oberen (13) und der unteren Rückhalteelemente (12) derart erfolgt, dass nicht nur die oberen (13) oder die unteren Rückhalteelemente (13) abwechselnd gemeinsam den Traystapel (11) entlasten, sondern während der Bewegung der Rückhalteelemente (12, 13) auch beide Rückhalteelemente (12, 13) zeitweise gemeinsam den Traystapel (11) entlasten.

9. Verfahren nach Anspruch 8, **dadurch gekennzeichnet, dass** ein wechselnder Eingriff der oberen (12) und der unteren Rückhalteelemente (13) zyklisch mit jedem abgestapelten Tray (2) erfolgt.

10. Verfahren nach Anspruch 8, **dadurch gekennzeichnet, dass** die Entlastung des Traystapels (11) über eine Zeit erfolgt, die einer Entstapelzeit von mehreren Trays (2) entspricht.

11. Verfahren nach Anspruch 10, **dadurch gekennzeichnet, dass** bei einem Zurückziehen der unteren Rückhalteelemente (12) eine Anzahl n ≥ 2 von Trays (2) freigegeben wird, die der Anzahl von Trays (2) entspricht, die zwischen den unteren (12) und den oberen Rückhalteelementen (13) vorgesehen sind.
